# FASCICULE DE BREVET EUROPEEN

(11) **EP 1 232 107 B1**
(45) Date de publication et mention de la délivrance du brevet: **29.09.2004**
(21) Numéro de dépôt: 00968022.4
(22) Date de dépôt: 12.10.2000
(51) Int. Cl.: B65G 1/127

(54) **ARMOIRE MECANIQUE DE STOCKAGE**
MECHANISCHER LAGERSCHRANK
MECHANICAL CABINET FOR STORAGE

(30) Priorité: 22.11.1999 FR 9914661
(43) Date de publication de la demande: 21.08.2002
(73) Titulaire: Morel, Fabien, 38410 Vaulnaveys-le-Bas (FR)
(72) Inventeur: Morel, Fabien, 38410 Vaulnaveys-le-Bas (FR)
(74) Mandataire: de Beaumont, Michel
(86) Numéro de dépôt international: PCT/FR2000/002843
(87) Numéro de publication internationale: WO 2001/038203

(56) Documents cités:
- DE-A- 3 713 675
- US-A- 2 600 869
- US-A- 5 108 163

## Description

La présente invention concerne une armoire mécanique compacte.

Une armoire mécanique contient plusieurs casiers de stockage identiques, dont chacun peut être amené à une position prédéterminée dans laquelle l'intérieur du casier est accessible depuis l'extérieur de l'armoire. De telles armoires permettent l'utilisation d'un volume de stockage réduit et elles permettent notamment un stockage en hauteur qui ne nécessite pas l'emploi d'une échelle ou d'un moyen de levage.

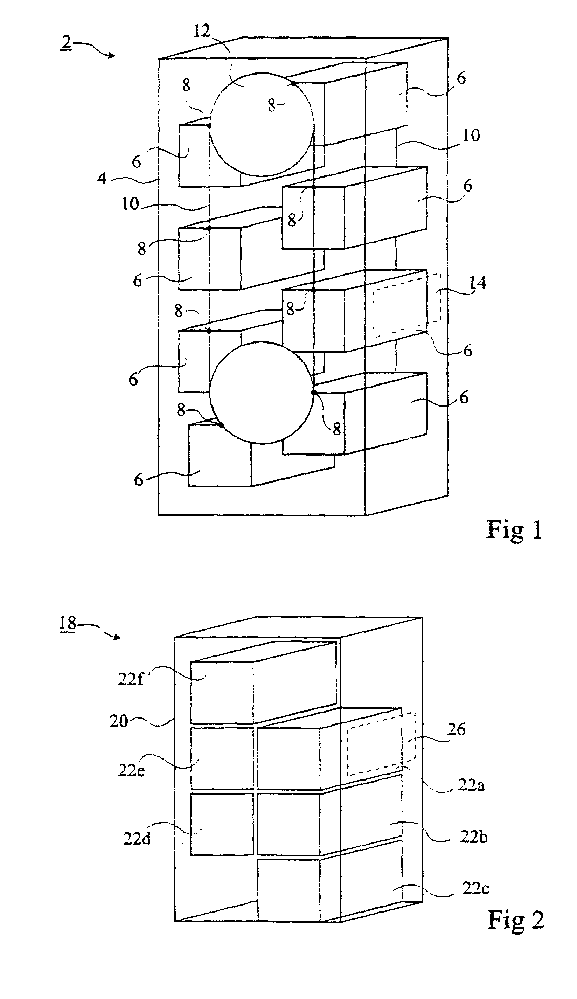

La figure 1 représente une armoire mécanique 2 classique. L'armoire 2 comprend un bâti parallélépipédique 4 qui contient des casiers de stockage 6 suspendus entre deux chaînes sans fin 10. Les chaînes 10 sont tendues verticalement entre deux paires de roues dentées 12 tournant autour d'axes (non représentés) fixés aux parois latérales du bâti. Des dispositifs d'entraînement (non représentés) permettent de faire défiler simultanément les chaînes sans fin 10 de manière à amener l'un quelconque des casiers à hauteur d'une ouverture 14 pratiquée dans la face avant du bâti. L'ouverture 14 permet à un opérateur d'accéder à l'intérieur du casier. Dans ce type d'armoire, lorsqu'un casier 6 arrive au niveau d'une paire de roues dentées 12, il suit un trajet circulaire et il faut que deux casiers voisins soient suffisamment espacés pour effectuer ce mouvement sans se cogner. Ceci entraîne que le taux de remplissage de l'armoire, c'est-à-dire le rapport entre le volume occupé par les casiers de stockage et le volume total de l'armoire, est limité. On peut réduire la distance séparant deux casiers en utilisant des roues dentées 12 ayant un rayon important devant la hauteur et la profondeur des casiers, mais cette solution ne permet pas d'obtenir un taux de remplissage qui dépasse 60%.

D'autre part, dans les armoires classiques, les casiers sont fixés de manière à pivoter librement par rapport à leurs points de fixation aux chaînes sans fin. Les chaînes sans fin peuvent ainsi faire un tour complet sans renverser les casiers. Par contre, une telle fixation ne permet pas de garantir l'horizontalité d'un casier si une charge lourde est placée à l'avant ou à l'arrière de ce casier. Un casier ainsi chargé peut se trouver fortement incliné, ce qui peut entraîner le bris d'objets fragiles entreposés dans le casier. En outre, les chaînes sans fin sont soumises à des contraintes importantes et elles doivent être très robustes, ce qui les rend encombrantes et coûteuses.

Les brevets US 2 600 869 et 5 108 163 décrivent chacun un type d'armoire mécanique dans lequel le déplacement vertical des casiers est assuré par deux chaînes sans fin, et dans lequel le déplacement horizontal des casiers est assuré par d'autres moyens. Les moyens permettant les déplacements des casiers de ces types d'armoires occupent un espace important et ne permettent pas d'obtenir un taux de remplissage élevé. En outre, ces brevets ne résolvent pas les problèmes de stabilité horizontale des casiers, ni ceux des contraintes importantes appliquées aux chaînes sans fin.

Un autre problème des armoires mécaniques connues est que si l'on veut pouvoir y entreposer des objets fragiles, on doit soumettre les casiers à de faibles accélérations. De façon classique, ceci nécessite des moteurs à commande complexe et coûteuse.

Un autre problème est que les armoires classiques sont difficiles à assembler. En particulier, il est particulièrement délicat d'introduire les casiers dans l'armoire, ou de les en retirer.

Enfin, le moteur d'entraînement est d'ordinaire situé dans l'armoire, ce qui diminue le taux de remplissage de l'armoire.

Un objet de la présente invention est de prévoir une armoire mécanique dont le taux de remplissage peut atteindre 80 à 90%.

Un autre objet de la présente invention est de prévoir une telle armoire dans laquelle les casiers ne peuvent subir une forte inclinaison.

Un autre objet de la présente invention est de prévoir une telle armoire, dans laquelle les casiers sont soumis à une accélération inférieure à une valeur limite prédéterminée, qui utilise un moteur qui peut seulement tourner à une vitesse fixe ou être arrêté.

Un autre objet de la présente invention est de prévoir une telle armoire dans laquelle il est particulièrement facile d'introduire ou de retirer les casiers.

Un autre objet de la présente invention est de prévoir une telle armoire dont le moteur est disposé à un emplacement qui soit facile d'accès et protégé.

Un autre objet de la présente invention est de prévoir une telle armoire particulièrement adaptée à être utilisée dans une enceinte frigorifique ou climatisée.

Pour atteindre ces objets, ainsi que d'autres, la présente invention prévoit une armoire mécanique comprenant un bâti et plusieurs casiers de stockage identiques parallélépipédiques mobiles disposés à l'intérieur du bâti, qui comprend des premiers moyens d'entraînement propres à déplacer horizontalement les casiers supérieurs et inférieurs, des seconds moyens d'entraînement propres à déplacer verticalement les casiers, et des moyens de déplacement permettant à l'un quelconque des casiers supérieurs ou inférieurs de rouler ou de glisser, respectivement sur la surface supérieure des casiers immédiatement inférieurs et sur le sol du bâti, les premiers moyens d'entraînement comprenant deux premières chaînes sans fin à défilement commandable disposées de part et d'autre du bâti, les premières chaînes sans fin étant munies à intervalles réguliers de premiers doigts d'entraînement propres à coopérer avec des premières butées situées sur les faces latérales des casiers, et les seconds moyens d'entraînement comprenant deux couples de deuxièmes chaînes sans fin à défilement commandable disposés de part et d'autre du bâti, les deuxièmes chaînes sans fin étant munies à intervalles réguliers de seconds doigts d'entraînement propres à coopérer avec des secondes butées situées sur les faces latérales des casiers.

Selon un mode de réalisation de la présente invention, les premiers doigts d'entraînement sont disposés de manière que, lorsqu'un casier est amené en position supérieure ou inférieure, les premières butées de ce casier viennent se positionner de part et d'autre d'un des premiers doigts, et les seconds doigts d'entraînement sont disposés de manière que les secondes butées de tous les casiers autres que les casiers supérieurs et inférieurs reposent sur des seconds doigts.

Selon un mode de réalisation de la présente invention, les moyens de déplacement sont des roulettes disposées sur les faces inférieures des casiers.

Selon un mode de réalisation de la présente invention, les secondes chaînes sont disposées de manière que les points le plus haut et le plus bas des secondes chaînes se trouvent en dessous des secondes butées respectivement des casiers supérieurs et des casiers inférieurs.

Selon un mode de réalisation de la présente invention, les premier et second moyens d'entraînement sont actionnés chacun par un dispositif d'entraînement, respectivement horizontal et vertical, actionné par la rotation d'un arbre principal unique.

Selon un mode de réalisation de la présente invention, chaque dispositif d'entraînement comprend un premier bras fixé par une première extrémité perpendiculairement à l'arbre principal, une première roue dentée tournant librement autour d'un axe parallèle à l'arbre principal et situé à la seconde extrémité du premier bras, une seconde roue dentée engrenant sur la première roue dentée, tournant de manière libre autour de l'arbre principal et propre à entraîner un arbre pour actionner le moyen d'entraînement, une came rainurée située dans un plan perpendiculaire à l'arbre principal, un doigt fixé perpendiculairement à la première roue dentée, prévu pour interagir avec la came lors de la rotation du premier bras, la rainure de la came étant telle que, l'arbre principal tournant à vitesse constante, pendant une première demi révolution de l'arbre principal la première roue dentée tourne autour de la seconde roue dentée sans entraîner sa rotation, pendant le quart de révolution suivant de l'arbre principal, la première roue dentée entraîne la seconde roue dentée à une vitesse croissant avec une accélération constante prédéterminée puis pendant le dernier quart de révolution de l'arbre principal, la première roue dentée entraîne la seconde roue dentée à une vitesse décroissant avec ladite accélération prédéterminée.

Selon un mode de réalisation de la présente invention, lesdits premiers bras des dispositifs d'entraînement horizontal et d'entraînement vertical sont fixés symétriquement de part et d'autre d'un même point de l'arbre principal, et les cames rainurées des dispositifs d'entraînement horizontal et d'entraînement vertical sont prévues pour que les secondes roues dentées des dispositifs d'entraînement horizontal et d'entraînement vertical ne soient pas entraînées simultanément.

Selon un mode de réalisation de la présente invention, l'armoire mécanique comprend un moyen pour produire de l'air climatisé, chaque casier comprenant une gaine destinée à faciliter la circulation de l'air climatisé dans l'armoire, la gaine étant munie de moyens réglables permettant de climatiser différemment chaque casier.

La présente invention vise également un procédé de déplacement de casiers d'une armoire mécanique comprenant un bâti et plusieurs casiers de stockage identiques parallélépipédiques disposés à l'intérieur du bâti selon au moins deux colonnes, caractérisé en ce qu'il comprend les étapes consistant à déplacer horizontalement les casiers supérieur et inférieur sensiblement de la profondeur d'un casier au moyen de deux premières chaînes sans fin à défilement commandable, disposées de part et d'autre du bâti, les premières chaînes étant munies à intervalles réguliers de premiers doigts d'entraînement propres à coopérer avec des premières butées situées sur les faces latérales des casiers, et décaler verticalement les deux colonnes sensiblement de la hauteur d'un casier au moyen de deux couples de deuxièmes chaînes sans fin à défilement commandable, disposés de part et d'autre du bâti, les deuxièmes chaînes étant munies à intervalles réguliers de second doigts d'entraînement propres à coopérer avec des secondes butées situées sur les faces latérales des casiers, le déplacement horizontal d'un casier inférieur vers la position immédiatement adjacente se faisant par roulement ou glissement sur le sol du bâti, et le déplacement horizontal d'un casier supérieur vers la position immédiatement adjacente se faisant par roulement ou glissement sur la face supérieure des casiers immédiatement inférieurs ou sur un plan situé à ce niveau.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1, précédemment décrite, représente schématiquement une armoire mécanique classique ;
la figure 2 représente schématiquement une armoire mécanique selon un mode de réalisation de la présente invention ;
les figures 3A à 3E illustrent le fonctionnement d'une armoire mécanique selon un mode de réalisation de la présente invention ;
la figure 4 représente schématiquement une vue de côté d'une armoire mécanique selon un mode de réalisation de la présente invention ;
les figures 5A à 5G illustrent le fonctionnement de l'armoire de la figure 4 ;
la figure 6 représente schématiquement un dispositif d'entraînement vertical utilisable avec une armoire mécanique selon un mode de réalisation de la présente invention ;
la figure 7 illustre le profil d'une came rainurée du dispositif d'entraînement vertical de la figure 6 ;
la figure 8 représente schématiquement une vue en coupe des dispositifs d'entraînement vertical et d'entraînement horizontal selon un mode de réalisation de la présente invention ;
la figure 9 représente schématiquement l'aspect extérieur d'une armoire selon un mode de réalisation de la présente invention ; et
la figure 10 représente schématiquement des casiers d'une armoire selon un mode de réalisation de la présente invention.

Dans les figures suivantes, de mêmes références désignent de mêmes éléments. Pour des raisons de clarté, seuls sont représentés les éléments utiles à la compréhension de la présente invention.

La figure 2 représente très schématiquement une armoire 18 selon un mode de réalisation de la présente invention. L'armoire 18 comprend un bâti parallélépipédique 20 qui contient un nombre pair, 2N, de casiers de stockage 22. On a représenté une armoire dans laquelle N=3, comportant 6 casiers 22a à 22f mais en pratique un nombre de casiers plus élevé sera généralement utilisé. Le volume intérieur du bâti a une hauteur légèrement supérieure à celle de N+1 casiers, une profondeur légèrement supérieure à celle de 2 casiers, et une largeur légèrement supérieure à celle d'un casier. Le volume intérieur du bâti étant sensiblement égal au volume de 2N+2 casiers, on obtient un taux de remplissage élevé qui croît avec N (80% pour 2N=8, 90% pour 2N=18). Les casiers 22 sont répartis en deux colonnes égales. Au repos, le casier inférieur d'une première colonne, comprenant les casiers 22a à 22c, repose sur le sol 24 du bâti et la seconde colonne, comprenant les casiers 22d à 22f, est maintenue, par des moyens qui seront décrits par la suite, aune hauteur prédéterminée légèrement supérieure à celle d'un casier. Des moyens d'entraînement, qui seront également décrits par la suite, permettent de déplacer les casiers entre deux positions de repos par permutation circulaire des casiers.

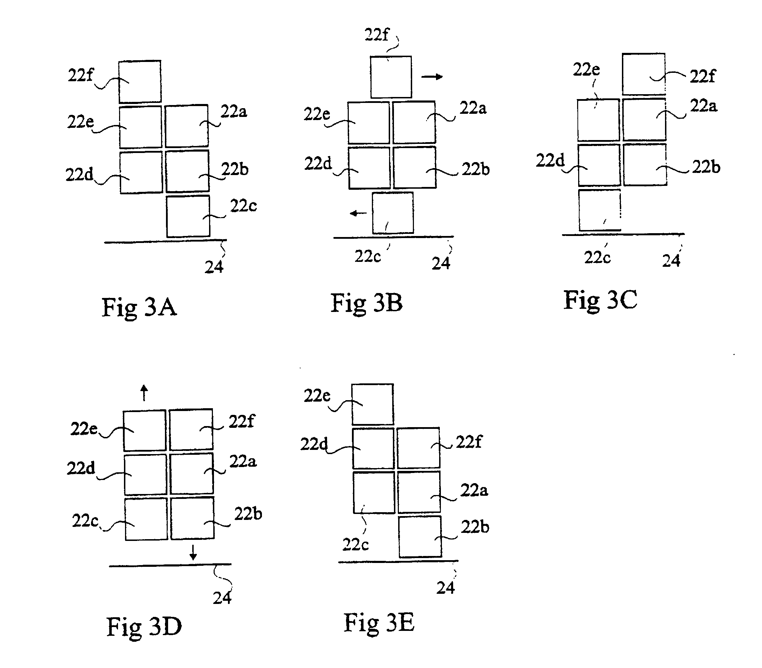

Les figures 3A à 3E illustrent les principales étapes d'une permutation circulaire des casiers 22. La figure 3A représente une vue de côté des casiers 22 dans une position de repos semblable à celle de la figure 2. Tout d'abord, comme cela est représenté en figures 3B et 3C, deux déplacements horizontaux simultanés de sens opposé amènent le casier supérieur 22f de la seconde colonne au sommet de la première colonne et le casier inférieur 22c de la première colonne à la base de la seconde colonne. Selon une caractéristique de la présente invention, pendant les déplacements horizontaux, les casiers en déplacement glissent avec un faible frottement ou roulent sur le sommet des deux casiers immédiatement inférieurs et sur le sol, respectivement. Enfin, comme cela est représenté en figures 3D et 3E, deux déplacements verticaux simultanés de sens opposé amènent la première colonne jusqu'au sol 24 du bâti et la seconde colonne jusqu'à la hauteur prédéterminée précédente.

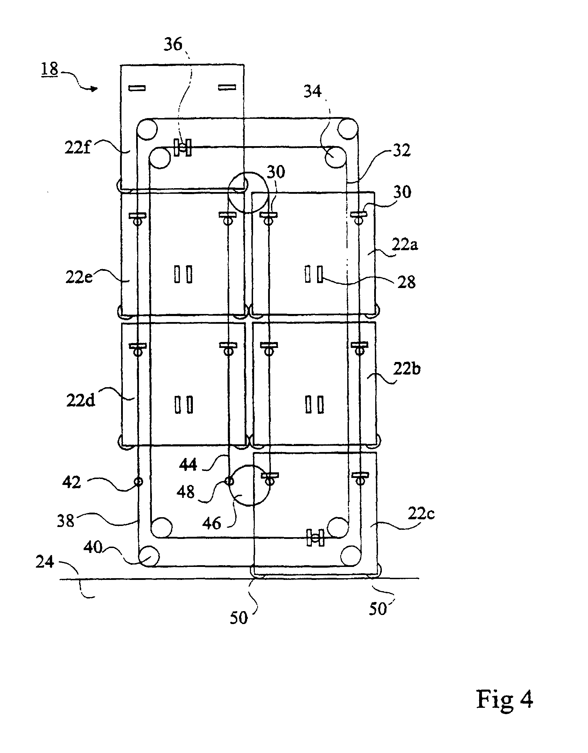

La figure 4 représente schématiquement un mode de réalisation de la présente invention. Les casiers 22a à 22f sont représentés dans leur position de repos de la figure 3A. Les faces latérales, à droite et à gauche du bâti, sont symétriques et il en va de même pour les faces latérales des casiers. Pour des raisons de simplicité, on ne décrira dans les figures qui suivent que les faces latérales gauches des casiers et du bâti et les éléments qui leur sont associés. Chaque casier 22 comporte, sur sa face latérale, deux butées verticales 28 et deux butées horizontales 30. Les butées verticales, faiblement espacées, sont disposées symétriquement de préférence sous le centre de la face latérale. Les butées horizontales sont disposées symétriquement, de préférence au-dessus d'une ligne médiane horizontale de la face latérale. Par la suite, on appellera "extérieur" un élément (par exemple une butée 30) d'un casier 22 qui est proche de l'extérieur du bâti. De même, on appellera "intérieur" un élément (par exemple une butée 30) d'un casier 22 qui est proche de l'intérieur du bâti.

Une première chaîne sans fin 32 est disposée entre quatre roues dentées 34 tournant autour d'axes fixés à la paroi latérale du bâti (non représentés), de manière notamment à former deux tronçons horizontaux respectivement à la hauteur du centre des butées verticales 28 des casiers supérieur 22f et inférieur 22c. La chaîne 32 comporte des doigts d'entraînement 36 qui dépassent vers l'intérieur du bâti perpendiculairement à sa face latérale. Les doigts d'entraînement 36 sont disposés de manière que, lorsqu'un casier est amené en position supérieure ou inférieure, ses butées verticales 28 viennent se positionner de part et d'autre d'un des doigts d'entraînement 36. La distance entre deux doigts 36 consécutifs est égale à l+δl, où l est la profondeur d'un casier, et où δl est la distance séparant les deux colonnes.

Une deuxième chaîne sans fin 38 est disposée entre quatre roues dentées 40 tournant autour d'axes fixés à la paroi latérale du bâti (non représentés), de manière notamment à former deux tronçons verticaux au niveau du centre des butées horizontales 30 extérieures de tous les casiers sauf le casier supérieur, lorsque les casiers sont au repos. La chaîne 38 comporte des doigts d'entraînement 42. Une troisième chaîne sans fin 44 est disposée entre deux roues dentées 46 tournant autour d'axes fixés à la paroi latérale du bâti (non représentés), de manière à former deux tronçons verticaux au niveau du centre des butées horizontales 30 intérieures de tous les casiers sauf le casier supérieur, lorsque les casiers sont au repos. La chaîne 44 comporte des doigts d'entraînement 48. Les doigts d'entraînement 42 et 48 des chaînes 38 et 44 sont disposés de manière que les butées horizontales 30 extérieure et intérieure de tous les casiers médians (autres que les casiers supérieur et inférieur), reposent respectivement sur des doigts 42 et 48 situés à des mêmes hauteurs. Ainsi, les casiers médians sont suspendus aux chaînes 38 et 44 par leurs butées horizontales. Deux doigts 42 ou 48 consécutifs sont distants d'une longueur h+δh, où h est la hauteur d'un casier, et δh une faible valeur correspondant à une marge de sécurité.

La face inférieure des casiers 22 comporte des roulettes 50 en chacun de ses quatre coins. On ne considère dans la suite de la description que les roulettes 50 intérieure et extérieure situées à proximité de la face gauche des casiers. Les roulettes 50 du casier supérieur 22f reposent sur le casier médian suivant 22e, et les roulettes 50 du casier inférieur 22c reposent sur le sol 24 du bâti. Les roulettes permettent un déplacement de l'avant vers l'arrière du bâti et réciproquement. La distance δh séparant deux casiers médians consécutifs est telle que les roulettes d'un casier ne reposent pas sur le casier suivant. On notera que les roulettes peuvent dépasser légèrement des faces avant et arrière des casiers. En effet, un jeu du dispositif d'entraînement horizontal peut faire qu'un casier inférieur ou supérieur n'est pas aligné avec les autres casiers de sa colonne à la fin d'un déplacement horizontal. Dans un tel cas, lors du déplacement vertical suivant, les coins des casiers non alignés pourraient être écrasés par ceux des autres casiers. Ainsi positionnées, les roulettes permettent aux casiers mal alignés de se repousser sans s'endommager lors de leurs déplacements verticaux. Selon une variante, il est possible de prévoir des roulettes 50 larges, saillant vers l'extérieur des casiers, et des guides (non représentés) comprenant chacun une gorge verticale destinée à recevoir la partie saillante des roulettes, pour guider le déplacement vertical des casiers. L'utilisation de tels guides permet notamment de réduire le bruit de fonctionnement de l'armoire.

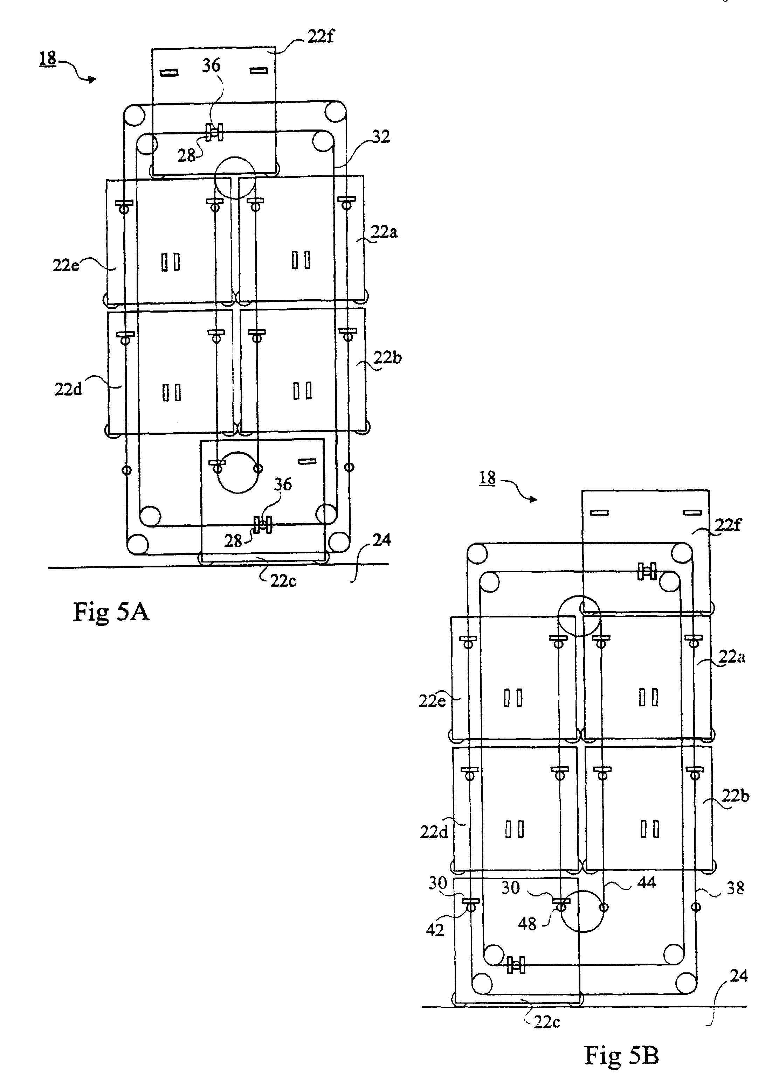

Les figures 5A à 5G illustrent le fonctionnement des éléments représentés en figure 4 lors d'une permutation circulaire destinée à amener le casier 22f de sa position de la figure 3A à sa position de la figure 3E.

La figure 5A représente les casiers 22 de l'armoire 18 après que la chaîne 32 a été mise en mouvement par un dispositif d'entraînement horizontal, qui sera décrit par la suite. Les doigts 36 compris entre les butées verticales 28 des casiers 22f et 22c agissent sur ces butées de manière à faire rouler ces casiers respectivement vers le sommet de la première colonne et vers le bas de la deuxième colonne. On notera que le casier 22f roule sur la face supérieure des casiers 22a et 22e des première et deuxième colonnes. Le rayon et le matériau des roulettes des casiers 22 sont prévus pour assurer un franchissement sans chocs de l'espace séparant les deux colonnes. Les casiers médians 22a, 22b, 22d et 22e, suspendus par leurs butées horizontales aux doigts d'entraînement 42 et 48, restent immobiles.

La figure 5B représente les casiers 22 de l'armoire 18 à la fin du déplacement horizontal des casiers 22f et 22c. Lorsque ces casiers ont été déplacés d'une colonne à l'autre, la chaîne 32 cesse de défiler. Les butées horizontales extérieure et intérieure du casier 22c sont alors situées respectivement au dessus d'un doigt d'entraînement 42 et d'un doigt d'entraînement 48. Un dispositif d'entraînement vertical, qui sera décrit par la suite, met simultanément en mouvement les chaînes 38 et 44 de manière à déplacer la première colonne vers le bas et la deuxième colonne vers le haut.

La figure 5C représente les casiers 22 de l'armoire 18 juste après le début du défilement des chaînes 38 et 44. Les casiers médians 22d et 22e ont été déplacés vers le haut et le casier 22c a été soulevé du sol par les doigts 42 et 48 situés sous ses butées horizontales 30. De même, les casiers médians 22a et 22b ont été déplacés vers le bas. Les roulettes 50 du casier 22f reposent toujours sur le casier 22a, et le casier 22f descend avec le casier 22a. La descente du casier 22f se poursuit dans cette position jusqu'à ce que sa butée horizontale 30 extérieure vienne reposer sur un doigt 42 de la chaîne 38.

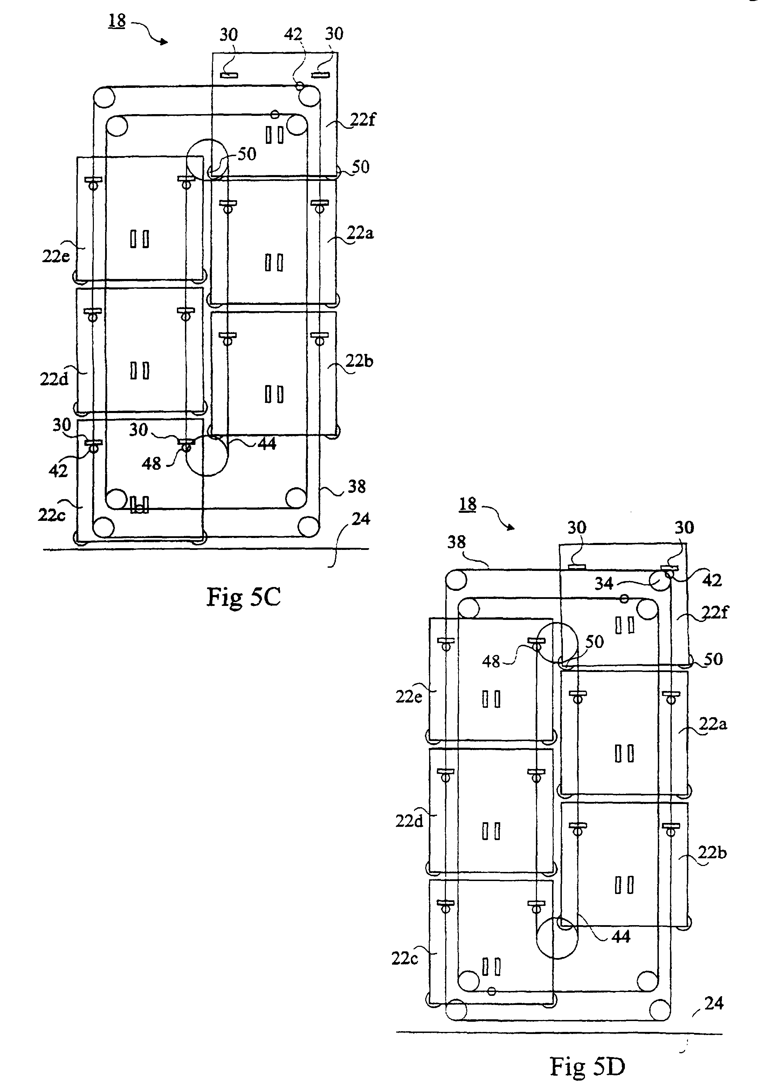

La figure 5D représente les casiers 22 de l'armoire 18 juste après que la butée horizontale 30 extérieure du casier 22f soit venue reposer sur un doigt 42 de la chaîne 38, au niveau d'une roue dentée 34. La roulette 50 intérieure du casier 22f repose toujours sur le casier 22a. Lorsque la descente de la deuxième colonne se poursuit, le casier 22f garde les mêmes appuis jusqu'à ce que sa butée horizontale 30 intérieure arrive au niveau de la chaîne 44 et qu'elle vienne reposer sur un doigt d'entraînement 48 de la chaîne 44.

La figure 5E représente les casiers 22 de l'armoire 18 juste après que le doigt 48 sur lequel repose la butée horizontale 30 intérieure du casier 22e soit arrivé au niveau d'une roue dentée 46. Ce doigt 48 suit alors un trajet circulaire, et son déplacement vertical est moins important que celui du casier 22d immédiatement inférieur. La roulette 50 intérieure du casier 22e vient reposer sur le casier 22d, et le doigt 48 s'écarte de la butée horizontale 30 intérieure en suivant la roue dentée 46. Pendant la montée de la seconde colonne, le casier 22e garde les mêmes appuis jusqu'à ce que le doigt 42 auquel il est toujours suspendu par sa butée horizontale 30 extérieure arrive au niveau d'une roue dentée 40 et suive un mouvement circulaire.

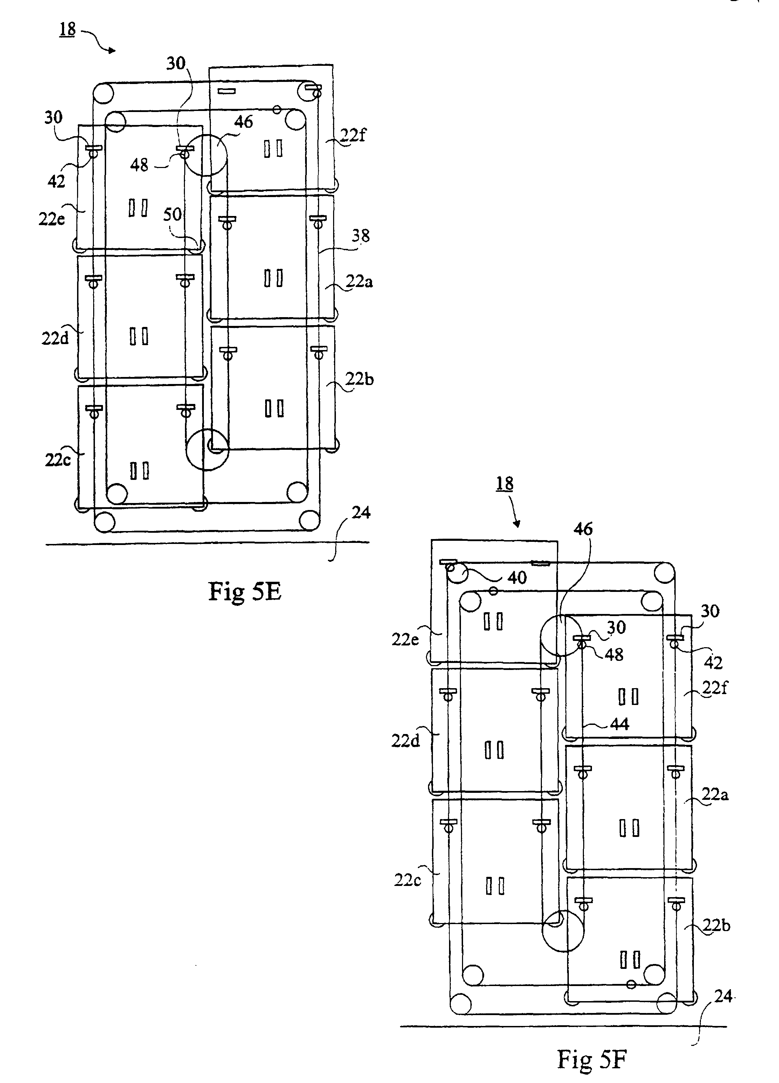

La figure 5F représente les casiers 22 de l'armoire 18 juste après que la butée horizontale 30 intérieure du casier 22f soit venue reposer sur un doigt 48 de la chaîne 44, au niveau d'une roue dentée 46. Le doigt 48 a progressivement rejoint le tronçon vertical de la chaîne 44, jusqu'à ce que le casier 22f soit suspendu à l'horizontale aux tronçons verticaux des chaînes 38 et 44.

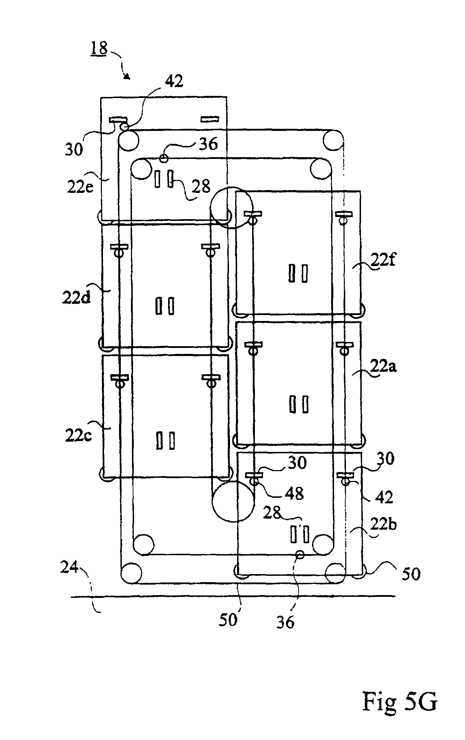

La figure 5G représente les casiers 22 de l'armoire 18 juste après que le doigt 42 sur lequel repose la butée horizontale 30 extérieure du casier 22e soit arrivé au niveau d'une roue dentée 40. Par un fonctionnement semblable à celui décrit en relation avec la figure 5E, la roulette 50 extérieure du casier 22e est venue reposer sur le casier 22d, puis le doigt 42 s'est écarté de la butée horizontale 30 extérieure. A partir de cet instant, tout le poids du casier 22e repose sur le casier 22d, et seul le déplacement vers le haut de ce dernier assure celui du casier 22e. Le mouvement vertical des première et deuxième colonnes se poursuit jusqu'à ce que le casier 22e arrive au sommet du bâti, et que les roulettes 50 du casier 22b viennent reposer sur le sol 24. On notera que les roulettes 50 du casier 22b touchent le sol 24 alors que les chaînes 38 et 44 défilent encore. Ainsi, à la fin de la descente de la première colonne, les butées horizontales 30 du casier 22b se situent plus haut que les doigts 42 et 48 des chaînes 38 et 44. En outre, lorsque les casiers 22e et 22b arrivent respectivement en haut et en bas des deuxième et première colonnes, leurs butées verticales 28 respectives viennent se placer de part et d'autre de doigts d'entraînement 36 de la chaîne 32. On a représenté une permutation circulaire des casiers 22 de l'arrière vers l'avant de l'armoire, mais l'armoire selon la présente invention permet également un mouvement symétrique inverse.

On notera que les casiers 22 sont maintenus sensiblement horizontaux par leurs appuis sur leurs roulettes ou sur leurs butées horizontales, ce qui prévient tout risque de basculement des casiers, quelle que puisse être la répartition de la charge à l'intérieur de chaque casier. De plus, le poids des casiers, réparti sur quatre points d'appui, permet de réaliser des points d'appui de robustesse réduite, simples à réaliser.

En outre, la présente invention permet de répartir le poids des casiers sur les deux chaînes d'entraînement vertical 38 et 44, ce qui permet d'utiliser des chaînes peu coûteuses et peu encombrantes.

On notera également qu'il est particulièrement simple d'introduire ou de retirer les casiers dans une armoire selon la présente invention. Pour cela, on prévoit une trappe d'accès inférieure, et on rehausse le sol de l'armoire (par exemple au moyen d'une planche) de manière que, lorsque le casier inférieur vient reposer sur le sol, les butées verticales 28 de ce casier restent au-dessus des doigts d'entraînement 36 de la chaîne 32. Un bref déplacement des chaînes 38 et 44 permet de séparer les doigts 42 et 48 des butées horizontales du casier inférieur. Le casier inférieur peut alors rouler librement sur le sol rehaussé, et être retiré facilement de l'armoire. L'insertion de casiers dans l'armoire se fait de la même manière.

Selon un aspect de la présente invention, on prévoit de déplacer les casiers 22 en faisant défiler les chaînes 32 et 38, 44 avec une accélération inférieure à un seuil prédéterminé, afin de pouvoir entreposer des matériels fragiles dans l'armoire. On utilise pour cela un dispositif mécanique simple, qui comprend un dispositif d'entraînement vertical et un dispositif d'entraînement horizontal qui sont tous deux entraînés par un moteur unique peu coûteux, qui peut seulement être arrêté ou tourner à une vitesse fixe.

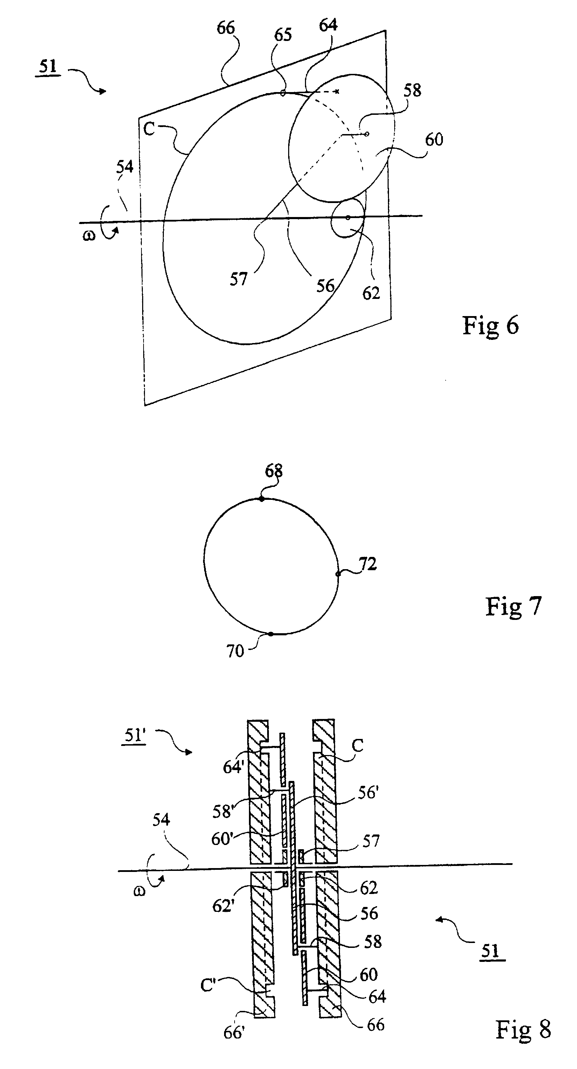

La figure 6 représente schématiquement un dispositif d'entraînement vertical 51 selon un mode de réalisation de la présente invention, permettant de faire tourner un arbre d'entraînement vertical (non représenté) à une vitesse ω_{V} variable à partir d'un arbre coaxial 54 entraîné à une vitesse constante ω_{I} par un moteur (non représenté). Un bras 56, fixé perpendiculairement à l'arbre 54 en un point 57, comporte en son extrémité un axe 58 parallèle à l'arbre 54 autour duquel tourne librement une roue dentée 60. La roue dentée 60 engrène sur une roue dentée 62 tournant librement autour de l'axe de l'arbre 54 et propre à entraîner l'arbre d'entraînement vertical. La somme des rayons des roues 60 et 62 est égale à la longueur du bras 56. Un doigt 64 est fixé perpendiculairement à un point de la roue dentée 60 et il est prévu pour, lorsque le bras 56 tourne, suivre un chemin C prédéterminé d'une came rainurée, par exemple une plaque 66 perpendiculaire à l'arbre 54 et rainurée selon le chemin C. Pour faciliter le suivi du chemin C par le doigt 64, ce dernier peut comporter un galet 65 qui vient porter sur la rainure de la plaque 66.

La figure 7 illustre schématiquement la forme de la rainure de la plaque 66. Le chemin C suivi par le doigt 64 comporte sensiblement trois secteurs angulaires. Pendant une première demi-révolution de l'arbre 54, le doigt 64 évolue entre deux points 68 et 70 en suivant une épicycloïde de manière que la roue 60 tourne autour de la roue 62 sans l'entraîner. Pendant le quart suivant de la révolution de l'arbre 54, entre le point 70 et un point 72, le doigt 64 suit une courbe telle que la roue 60 provoque une demi-révolution de la roue 62 à une vitesse ω_{V} croissant avec une accélération constante prédéterminée. Pendant le dernier quart de la révolution de l'arbre 54, le doigt 64 se déplace entre les points 72 et 68 selon une courbe telle que la roue 60 entraîne une demi-révolution de la roue 62 avec une vitesse ω_{V} décroissante selon une décélération constante prédéterminée. On notera que le dispositif 51 permet d'entraîner la roue 62 dans un sens ou dans l'autre en fonction du sens de rotation de l'arbre 54.

La figure 8 représente schématiquement une vue en coupe du dispositif d'entraînement vertical 51 décrit précédemment, couplé à un dispositif d'entraînement horizontal symétrique 51'. Le dispositif 51' comporte un bras 56' symétrique du bras 56 par rapport au point 57. Le dispositif 51' comprend en outre des éléments 58', 60', 62' et 64' qui sont respectivement symétriques des éléments 58, 60, 62 et 64 par rapport au point 57. Enfin, le dispositif 51' comprend une came rainurée 66', symétrique de la came rainurée 66 par rapport à un plan perpendiculaire à l'arbre 54 passant par le point 57. Le dispositif 51' a un fonctionnement en tout point semblable à celui du dispositif 51, mais la configuration des cames rainurées 66 et 66' fait que les roues 62 et 62' ne sont jamais mises en rotation simultanément. Ainsi, une rotation continue de l'axe 54 entraîne une rotation à une vitesse croissante puis décroissante de la roue 62 alors que la roue 62' est à l'arrêt, et réciproquement.

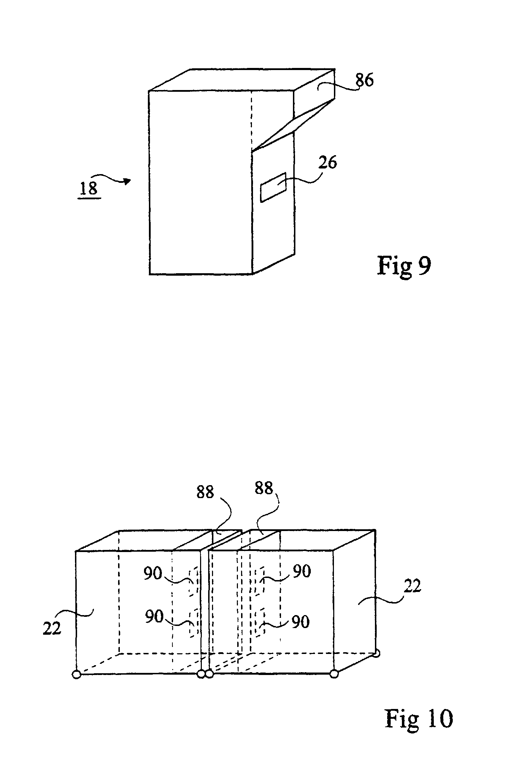

La figure 9 représente très schématiquement une vue en perspective d'une armoire 18 selon un mode de réalisation de la présente invention, dans laquelle les dispositifs d'entraînement sont disposés contre la face avant de l'armoire en une position élevée et protégée par un capot 86. Dans une telle configuration, le moteur ainsi que les dispositifs d'entraînement horizontaux et verticaux ne gênent pas l'accès d'un opérateur à l'ouverture 26, tout en restant facilement accessibles.

Selon un mode de réalisation de l'invention, on prévoit également d'installer au sommet de l'armoire 18 (par exemple sous le capot 86 précédent) un appareil permettant de réguler la température de l'air dans l'armoire, tel qu'un générateur de froid. Les casiers 22 sont modifiés de manière à laisser circuler l'air climatisé. La figure 10 illustre des casiers 22 ainsi modifiés, dans le fond desquels a été formée une gaine verticale 88 destinée à faciliter la circulation d'air climatisé dans l'armoire. La gaine 88 peut être vide ou comporter des ailettes de déflexion. La gaine 88 peut également communiquer avec l'intérieur des casiers par l'intermédiaire d'ouvertures 90. Les ailettes de déflexion ou les ouvertures peuvent alors être réglables pour permettre de climatiser différemment chaque casier.

Bien entendu, la présente invention est susceptible de diverses variantes et modifications qui apparaîtront à l'homme de l'art. A titre d'exemple, le mode de réalisation préféré a la forme d'une armoire verticale, mais l'homme du métier pourra adapter la présente invention à une armoire horizontale ou inclinée, ou même éventuellement composée de deux rangées horizontales et de deux colonnes verticales disposées autour d'une zone utilisée à d'autres fins. On notera que la présente invention est applicable à des casiers de grande taille prévus pour supporter de très lourdes charges, qui permettent par exemple de stocker des automobiles. Également, les positions des butées horizontales et verticales pourront être ajustées pour chaque mode de réalisation particulier d'une armoire selon la présente invention.

Bien que l'on ait indiqué que chaque casier comporte des roulettes inférieures pour, lors des déplacements horizontaux, rouler sur le sol ou sur les parois supérieures des deux casiers voisins, d'autres moyens pourront être prévus pour assurer un glissement de faible frottement, par exemple des bandes de glissement associées à des plats en Téflon.

## Revendications

1. Armoire mécanique comprenant un bâti (20) et plusieurs casiers de stockage identiques parallélépipédiques (22) mobiles disposés à l'intérieur du bâti, des premiers moyens d'entraînement propres à déplacer horizontalement les casiers supérieurs (22f) et inférieurs (22c), des seconds moyens d'entraînement (38, 44) propres à déplacer verticalement les casiers, et des moyens de déplacement (50) permettant à l'un quelconque des casiers supérieurs (22f) ou inférieurs (22c) de rouler ou de glisser, respectivement sur la surface supérieure des casiers immédiatement inférieurs (22e, 22a) et sur le sol (24) du bâti, **caractérisée en ce que** :
les premiers moyens d'entraînement comprennent deux premières chaînes sans fin (32) à défilement commandable disposées de part et d'autre du bâti, les premières chaînes sans fin étant munies à intervalles réguliers de premiers doigts d'entraînement (36) propres à coopérer avec des premières butées (28) situées sur les faces latérales des casiers, et
les seconds moyens d'entraînement comprennent deux couples de deuxièmes chaînes sans fin (38, 44) à défilement commandable disposés de part et d'autre du bâti, les deuxièmes chaînes sans fin étant munies à intervalles réguliers de seconds doigts d'entraînement (42, 48) propres à coopérer avec des secondes butées (30) situées sur les faces latérales des casiers.

2. Armoire mécanique selon la revendication 1, **caractérisée en ce que** :
les premiers doigts d'entraînement (36) sont disposés de manière que, lorsqu'un casier est amené en position supérieure ou inférieure, les premières butées (28) de ce casier viennent se positionner de part et d'autre d'un des premiers doigts, et
les seconds doigts d'entraînement (42, 48) sont disposés de manière que les secondes butées (30) de tous les casiers autres que les casiers supérieurs et inférieurs reposent sur des seconds doigts (42, 48).

3. Armoire mécanique selon la revendication 1, **caractérisée en ce que** les moyens de déplacement sont des roulettes (50) disposées sur les faces inférieures des casiers.

4. Armoire mécanique selon la revendication 1, **caractérisée en ce que** les deuxièmes chaînes (38, 44) sont disposées de manière que les points le plus haut et le plus bas des secondes chaînes se trouvent en dessous des secondes butées respectivement des casiers supérieurs et des casiers inférieurs.

5. Armoire mécanique selon la revendication 1, **caractérisée en ce que** les premier et second moyens d'entraînement sont actionnés chacun par un dispositif d'entraînement, respectivement horizontal et vertical, actionné par la rotation d'un arbre principal unique.

6. Armoire mécanique selon la revendication 5, **caractérisée en ce que** chaque dispositif d'entraînement (51) comprend :
un premier bras (56) fixé par une première extrémité perpendiculairement à l'arbre principal (54),
une première roue dentée (60) tournant librement autour d'un axe (58) parallèle à l'arbre principal et situé à la seconde extrémité du premier bras,
une seconde roue dentée (62) engrenant sur la première roue dentée, tournant de manière libre autour de l'arbre principal et propre à entraîner un arbre pour actionner le moyen d'entraînement,
une came rainurée (66) située dans un plan perpendiculaire à l'arbre principal,
un doigt (64) fixé perpendiculairement à la première roue dentée, prévu pour interagir avec la came lors de la rotation du premier bras, la rainure de la came étant telle que, l'arbre principal tournant à vitesse constante, pendant une première demi révolution de l'arbre principal (54) la première roue dentée (60) tourne autour de la seconde roue dentée (62) sans entraîner sa rotation, pendant le quart de révolution suivant de l'arbre principal, la première roue dentée entraîne la seconde roue dentée à une vitesse croissant avec une accélération constante prédéterminée puis pendant le dernier quart de révolution de l'arbre principal, la première roue dentée entraîne la seconde roue dentée à une vitesse décroissant avec ladite accélération prédéterminée.

7. Armoire mécanique selon la revendication 6 **caractérisée en ce que** lesdits premiers bras (56, 56') des dispositifs d'entraînement horizontal et d'entraînement vertical sont fixés symétriquement de part et d'autre d'un même point (57) de l'arbre principal (54), et **en ce que** les cames rainurées (66, 66') des dispositifs d'entraînement horizontal et d'entraînement vertical sont prévues pour que les secondes roues dentées (62, 62') des dispositifs d'entraînement horizontal et d'entraînement vertical ne soient pas entraînées simultanément.

8. Armoire mécanique selon l'une quelconque des revendications précédentes, comprenant un moyen (86) pour produire de l'air climatisé, dans laquelle chaque casier comprend une gaine (88) destinée à faciliter la circulation de l'air climatisé dans l'armoire, la gaine étant munie de moyens réglables (90) permettant de climatiser différemment chaque casier.

9. Procédé de déplacement de casiers d'une armoire mécanique comprenant un bâti (20) et plusieurs casiers de stockage identiques parallélépipédiques (22) disposés à l'intérieur du bâti selon au moins deux colonnes, **caractérisé en ce qu'**il comprend les étapes consistant à :
déplacer horizontalement les casiers supérieur et inférieur sensiblement de la profondeur d'un casier au moyen de deux premières chaîne sans fin (32) à défilement commandable, disposées de part et d'autre du bâti, les premières chaînes étant munies à intervalles réguliers de premiers doigts d'entraînement (36) propres à coopérer avec des premières butées situées sur les faces latérales des casiers, et
décaler verticalement les deux colonnes sensiblement de la hauteur d'un casier au moyen de deux couples de deuxièmes chaînes sans fin (38, 44) à défilement commandable, disposés de part et d'autre du bâti, les deuxièmes chaînes étant munies à intervalles réguliers de second doigts d'entraînement (42, 48) propres à coopérer avec des secondes butées (30) situées sur les faces latérales des casiers, le déplacement horizontal d'un casier inférieur vers la position immédiatement adjacente se faisant par roulement ou glissement sur le sol du bâti, et le déplacement horizontal d'un casier supérieur vers la position immédiatement adjacente se faisant par roulement ou glissement sur la face supérieure des casiers immédiatement inférieurs ou sur un plan situé à ce niveau.

## Patentansprüche

1. Mechanischer Schrank mit einem Rahmen (20) und mehreren identischen beweglichen parallelepipedförmigen Lagerschubladen (22), die innerhalb des Rahmens angeordnet sind, ersten Antriebsmitteln, welche die obere (22f) und die untere (22c) Schublade horizontal verschieben können, zweiten Antriebsmitteln (38,44), welche die Schubladen vertikal verschieben können, und Verschiebungsmitteln (50), die es ermöglichen, daß jede der oberen (22f) und der unteren (22c) Schubladen auf der Oberseite der unmittelbar darunter liegenden Schubladen (22e, 22a) bzw. auf dem Boden (24) des Rahmens rollen oder gleiten, **dadurch gekennzeichnet, daß**
die ersten Antriebsmittel zwei erste steuerbar laufende Endlosketten (32) aufweisen, die auf beiden Seiten des Rahmens angeordnet sind, wobei die erste Endloskette in regelmäßigen Intervallen erste Antriebsfinger (36) aufweisen, welche mit ersten Anschlägen (28) zusammenwirken, welche an den Seitenflächen der Schubladen angeordnet sind, und
die zweiten Antriebsmittel zwei Paare zweiter steuerbar laufender Endlosketten (38,44) aufweisen, die auf beiden Seiten des Rahmens angeordnet sind, wobei die zweiten Endlosketten in regelmäßigen Intervallen zweite Antriebsfinger (42,48) aufweisen, welche mit zweiten Anschlägen (30) zusammenwirken, die an den Seitenflächen der Schubladen angeordnet sind.

2. Mechanischer Schrank nach Anspruch 1, **dadurch gekennzeichnet, daß** die ersten Antriebsfinger (36) so angeordnet sind, daß dann, wenn eine Schublade in eine obere oder untere Position gebracht wird, die ersten Anschläge (28) dieser Schublade auf beiden Seien eines der ersten Finger liegen, und
die zweiten Antriebsfinger (42,48) so angeordnet sind, daß die zweiten Anschläge (30) aller anderen Schubladen, außer der obersten und der untersten Schublade, auf den zweiten Fingern (42,48) ruhen.

3. Mechanischer Schrank nach Anspruch 1, **dadurch gekennzeichnet, daß** die Verschiebungsmittel Räder (50) sind, die auf Unterseiten der Schubladen angeordnet sind.

4. Mechanischer Schrank nach Anspruch 1, **dadurch gekennzeichnet, daß** die zweiten Ketten (38,44) so angeordnet sind, daß die obersten und untersten Punkte der zweiten Ketten unter den zweiten Anschlägen der oberen Schubladen bzw. der unteren Schubladen liegen.

5. Mechanischer Schrank nach Anspruch 1, **dadurch gekennzeichnet, daß** die ersten und zweiten Antriebsmittel jeweils durch eine horizontale bzw. eine vertikale Antriebsvorrichtung betätigt werden, welche durch die Drehung einer einzelnen Hauptwelle betätigt wird.

6. Mechanischer Schrank nach Anspruch 5, **dadurch gekennzeichnet, daß** jede Antriebsvorrichtung (51) folgende Merkmale aufweist:
einen ersten Arm (56), der mit einem ersten Ende senkrecht an der Hauptwelle (54) befestigt ist,
ein erstes Zahnrad (60), das sich frei um eine Achse (58) dreht, die parallel zu der Hauptachse ist und an dem zweiten Ende des ersten Arms angeordnet ist,
ein zweites Zahnrad (62), das mit dem ersten Zahnrad in Eingriff ist, sich frei um die Hauptwelle dreht und eine Welle zum Betätigen der Antriebsmittel antreiben kann, eine gerillte Nockenvorrichtung (66), die in einer Ebene angeordnet ist, welche senkrecht zur Hauptwelle liegt,
einen Finger (64), der senkrecht zu dem ersten Zahnrad angeordnet ist und dazu vorgesehen ist, mit der Nockenvorrichtung bei Drehung des ersten Arms zusammenzuwirken, wobei die Rille der Nockenvorrichtung so ausgebildet ist, daß sich die Hauptwelle mit einer konstanten Geschwindigkeit dreht, während einer ersten Halbdrehung der Hauptwelle (54) sich das erste Zahnrad (60) um das zweite Zahnrad (62) dreht, ohne dessen Drehung zu verursachen, während der nächsten Vierteldrehung der Hauptwelle das erste Zahnrad das zweite Zahnrad mit einer Geschwindigkeit antreibt, welche mit einer vorgegebenen konstanten Beschleunigung zunimmt, und dann während der nächsten Vierteldrehung der Hauptwelle das erste Zahnrad das zweite Zahnrad mit einer Geschwindigkeit antreibt, welche mit einer vorgegebenen Beschleunigung abnimmt.

7. Mechanischer Schrank nach Anspruch 6, **dadurch gekennzeichnet, daß** die ersten Arme (56,56') der horizontalen und vertikalen Antriebsvorrichtungen symmetrisch aufbeiden Seiten ein und desselben Punktes (57) der Hauptwelle (54) angeordnet sind und daß die gerillten Nockenvorrichtungen (66,66') der horizontalen und der vertikalen Antriebsvorrichtungen so vorgesehen sind, daß die zweiten Zahnräder (62,62') der horizontalen und der vertikalen Antriebsvorrichtung nicht gleichzeitig angetrieben werden.

8. Mechanischer Schrank nach einem der vorangehenden Ansprüche, mit einer Vorrichtung (86) zum Erzeugen von klimatisierter Luft, wobei jeder Schrank eine Hülle (88) aufweist, welche die Zirkulation der klimatisierten Luft in dem Schrank erleichtern soll, wobei die Hülle mit einer einstellbaren Vorrichtung (90) ausgestattet ist, welche unterschiedliche Klimatisierungen jeder Schublade erlaubt.

9. Verfahren zum Verschieben von Schubladen eines mechanischen Schrankes, der einen Rahmen (20) und mehrere identische parallelepipedförmige Lagerschubladen (22) aufweist, die innerhalb des Schrankes in wenigstens zwei Säulen angeordnet sind, **gekennzeichnet durch** die folgenden Verfahrensschritte:
horizontales Verschieben der oberen und der unteren Schubladen im wesentlichen über die Tiefe einer Schublade mittels zwei ersten steuerbar laufenden Endlosketten (32), welche auf beiden Seiten des Rahmens angeordnet sind, wobei die ersten Ketten in regelmäßigen Intervallen erste Antriebsfinger (36) aufweisen, welche mit ersten Anschlägen zusammenwirken können, welche auf den Seitenflächen der Schubladen angeordnet sind, und
vertikales Verschieben der zwei Säulen im wesentlichen um die Höhe einer Schublade mittels zwei Paaren zweiter steuerbar laufender Endlosketten (38,44), die auf beiden Seiten des Rahmens angeordnet sind, wobei die zweiten Ketten in regelmäßigen Intervallen zweite Antriebsfinger (42,48) aufweisen, welche mit zweiten Anschlägen (30) zusammenwirken können, die an den Seitenflächen der Schublade angeordnet sind, wobei die horizontale Verschiebung einer unteren Schublade in die unmittelbar benachbarte Position **durch** Rollen oder Schieben auf dem Boden des Rahmens durchgeführt wird, und die horizontale Verschiebung der oberen Schublade in die unmittelbar benachbarte Position **durch** Rollen oder Schieben auf der Oberfläche der unmittelbar darunter liegenden Schubladen oder in einer auf diesem Niveau liegenden Ebene erfolgt.

## Claims

1. A mechanical cabinet including a frame (20) and several identical mobile parallelepipedic storage drawers (22) arranged inside of the frame, first driving means adapted to horizontally displace the upper (22f) and lower (22c) drawers, second driving means (38, 44) adapted to vertically displace the drawers, and displacing means (50) enabling any of the upper (22f) or lower (22c) drawers to roll or slide, respectively on the upper surface of the immediately lower drawers (22e, 22a) and on the frame floor (24), **characterized in that**:
the first driving means include two first controllably-running endless chains (32) arranged on both sides of the frame, the first endless chains being provided at regular intervals with first driving fingers (36) adapted to cooperate with first stops (28) located on the lateral surfaces of the drawers, and
the second driving means include two pairs of second controllably-running endless chains (38, 44) arranged on both sides of the frame, the second endless chains being provided at regular intervals with second driving fingers (42, 48) adapted to cooperate with second stops (30) located on the lateral surfaces of the drawers.

2. The mechanical cabinet of claim 1, **characterized in that**:
the first driving fingers (36) are arranged so that, when a drawer is brought to an upper or lower position, the first stops (28) of this drawer position on either side of one of the first fingers, and
the second driving fingers (42, 48) are arranged so that the second stops (30) of all drawers other than the upper and lower drawers rest on second fingers (42, 48).

3. The mechanical cabinet of claim 1, **characterized in that** the displacing means are wheels (50) arranged on the lower surfaces of the drawers.

4. The mechanical cabinet of claim 1, **characterized in that** the second chains (38, 44) are arranged so that the highest and lowest points of the second chains are under second stops respectively of the upper drawers and of the lower drawers.

5. The mechanical cabinet of claim 1, **characterized in that** the first and second driving means are each actuated by a driving device, respectively horizontal and vertical, actuated by the rotation of a single main shaft.

6. The mechanical cabinet of claim 5, **characterized in that** each driving device (51) includes:
a first arm (56) attached by a first end perpendicularly to the main shaft (54),
a first toothed wheel (60) rotating freely around an axis (58) parallel to the main axis and located at the second end of the first arm,
a second toothed wheel (62) catching in the first toothed wheel, freely rotating around the main shaft and adapted to driving a shaft to actuate the driving means,
a grooved cam (66) located in a plane perpendicular to the main shaft,
a finger (64) attached perpendicularly to the first toothed wheel, provided to interact with the cam upon rotation of the first arm, the groove of the cam being such that, the main shaft rotating at constant speed, during a first half revolution of the main shaft (54), the first toothed wheel (60) rotates around the second toothed wheel (62) without causing its rotation, during the next quarter revolution of the main shaft, the first toothed wheel drives the second toothed wheel at a speed increasing with a predetermined constant acceleration, then, during the next quarter revolution of the main shaft, the first toothed wheel drives the second toothed wheel at a speed decreasing with said predetermined acceleration.

7. The mechanical cabinet of claim 6, **characterized in that** said first arms (56, 56') of the horizontal and vertical driving devices are attached symmetrically on either side of a same point (57) of the main shaft (54), and **in that** the grooved cams (66, 66') of the horizontal and vertical driving devices are provided so that the second toothed wheels (62, 62') of the horizontal and vertical driving devices are not simultaneously driven.

8. The mechanical cabinet of any of the preceding claims, including a means (86) for generating conditioned air, each cabinet including a sheath (88) intended to ease the circulation of the conditioned air in the cabinet, the sheath being provided with adjustable means (90) enabling different conditioning of each drawer.

9. A method for displacing drawers of a mechanical cabinet including a frame (20) and several identical parallelepipedic storage drawers (22) arranged inside of the frame along at least two columns, **characterized in that** it includes the steps of:
horizontally displacing the upper and lower drawers substantially by the depth of a drawer by means of two first controllably-running endless chains (32), arranged on both sides of the frame, the first chains being provided at regular intervals with first driving fingers (36) adapted to cooperate with first stops located on the lateral surfaces of the drawers, and
vertically shifting the two columns substantially by the height of a drawer by means of two pairs of second controllably-running endless chains (38, 44), arranged on both sides of the frame, the second chains being provided at regular intervals with second driving fingers (42, 48) adapted to cooperate with second stops (30) located on the lateral surfaces of the drawers, the horizontal displacement of a lower drawer to the immediately adjacent position being performed by rolling or sliding on the frame floor, and the horizontal displacement of an upper drawer to the immediately adjacent position occurring by rolling or sliding on the upper surface of the immediately lower drawers or on a plane located at this level.
